# EUROPEAN PATENT APPLICATION

(11) **EP 2 716 411 A2**
(43) Date of publication of application: **09.04.2014**
(21) Application number: 13004792.1
(22) Date of filing: 04.10.2013
(51) Int. Cl.: B25F 5/00, B27B 17/00

(54) **Power tool**

(30) Priority: 05.10.2012 JP 2012222913
(71) Applicant: Makita Corporation, Anjo-shi, Aichi 446-8502 (JP)
(72) Inventor: Hirabayashi, Shinji, Anjo-shi Aichi, 446-8502 (JP); Yanagihara, Kenya, Anjo-shi Aichi, 446-8502 (JP); Ichikawa, Yoshitaka, Anjo-shi Aichi, 446-8502 (JP)
(74) Representative: Müller-Boré & Partner Patentanwälte PartG mbB

(57) **Abstract**

A chain saw (100) as a power tool comprises a combustion engine (111) and an electric motor (141) . The chain saw (100) has a driving shaft (131) which drives a saw chain (105), a battery pack (137) which provides electric current to the electric motor (141), a controller (139) which is connected to the battery pack (137), and a sensor (162, 163) which detects a driving state of a driving mechanism including the combustion engine (111) and the electric motor (141) . In the chain saw (100), the saw chain (105) is driven in a hybrid driving mode in which both the combustion engine (111) and the electric motor (141) drive the driving shaft (139). Further, the controller (139) controls a driving of the combustion engine (111) based on a detection result of the sensor (162, 163).

## Description

### Introduction:

The invention relates to a power tool which drives a tool and performs a predetermined operation.

### Description of the Related Art:

Japanese Laid-Open Patent Application Publication No. 2011-244724 discloses a brush cutter which has an engine and a motor. The brush cutter drives a blade by means of the engine or the motor respectively by switching the engine and the motor which are provided as driving sources.

### Statement of Invention:

In the brush cutter described above, the engine and the motor which are provided as driving sources. The engine and the motor are driven independently to each other. That is, when one driving source is driven, the other driving source stops driving operation. Accordingly, for a user of such brush cutter, when one driving source is driven, the other driving source is unnecessary in terms of a driving of the brush cutter.

An object of the invention is, in consideration of the above described problem, to rationalize a driving of a power tool which has an engine and a motor.

Above-mentioned object is achieved by an invention of claim 1. According to a preferable aspect of the invention, a power tool comprises an engine, a motor, a driving shaft which drives a tool bit, a battery which provides electric current to the motor, a controller which is connected to the battery, a driving mechanism which is defined by at least the engine and the motor, and a driving mechanism state detector which detects a driving state of the driving mechanism. The tool bit is typically defined by a tool such as a hammer bit, a drill bit, a blade, a saw chain and so on, which is detachably attached to the power tool and the attached tool performs a predetermined operation on a workpiece. The driving state may include not only a state of the driving mechanism when the power tool is driven but also a state of the driving mechanism before the power tool drives. The tool bit is driven in a hybrid driving mode in which both the engine and the motor drive the driving shaft. Further, the controller controls a driving of the engine based on a detection result of the driving mechanism state detector. Typically, the engine according to the invention is represented by a combustion engine, and the motor is represented by an electric motor. In this aspect and following aspects, "to control a driving of the engine" preferably includes "to restrict a rotation speed of the engine", "to stop the engine", and "to prevent a starting of the engine". Further, the controller may disable the driving of the engine based on the detection result of the driving mechanism state detector. In such case, "to disable the driving of the engine" includes "to stop the engine after the engine is started" or "to prevent a starting of the engine".

According to this aspect, a hybrid power tool in which both the engine and the motor drive the driving shaft is provided. Further, as the driving state of the driving mechanism is detected, the driving of the engine is controlled to be safely when a driving mechanism failure is occurred. That is, the hybrid power tool which has a checking mechanism for checking the driving mechanism is provided. The driving mechanism failure preferably includes an engine failure, a motor failure, a fuel supply system failure, an electricity supply system failure, and a failure of a hybrid driving mechanism for driving both the engine and the motor.

A further aspect may be provided as the driving mechanism state detector includes a first sensor which detects a state of the engine. The driving state of the engine preferably includes a state of the engine itself and other components for driving the engine. That is, other components preferably include a fuel supply system and an electricity supply system, for example, a fuel tank, a fuel pipe, a battery which provides electric current to a spark plug of the engine and so on.

According to this aspect, based on the detection result with respect to the driving state of the engine, an engine failure is detected. The engine failure means a failure of the engine and/or other components for driving the engine. Accordingly, the driving of the engine can be controlled by the controller when the engine failure is occurred.

A further aspect may be preferably provided as the first sensor detects the driving state of the engine before the engine is started. Further, the controller controls the engine based on a detection result of the first sensor so that a starting of the engine is disabled.

According to this aspect, since the first sensor detects the driving state of the engine before the engine is stated, an engine start failure is prevented.

A further aspect may be preferably provided as the first sensor detects the driving state of the engine after the engine is started. Further, the controller controls the driving of the engine based on a detection result of the first sensor.

According to this aspect, since the first sensor detects the driving state of the engine after the engine is started, when the engine failure is occurred during a driving period of the engine, the driving of the engine is safely controlled.

A further aspect may be preferably provided as the driving mechanism state detector includes a second sensor which detects a driving state of the motor. Further, the controller controls the driving of the engine based on a detection result of the second sensor. The driving state of the motor preferably includes a state of the motor itself and other components for driving the motor. That is, other components preferably include an electricity supply system and so on, for example, a battery which provides electric current to the motor.

According to this aspect, based on the detection result of the second sensor, in a case that a motor failure is detected on the motor which is one driving source in the hybrid driving mechanism, the rotation speed of the engine is restricted and/or the driving of the engine is stopped. That is, in a case that the hybrid driving mechanism does not work normally due to the motor failure, the hybrid driving mechanism is safely controlled. Further, since the second sensor detects electric current provided to the motor, load exerted on the motor is further detected. Accordingly, the engine failure is detected by means of the load exerted on the motor. That is, the driving state of the engine is detected indirectly via the state of the motor instead of detecting directly the state of the engine.

A further aspect may be preferably provided as the controller stops firing of the engine and/or providing fuel to the engine to disable the driving of the engine.

According to this aspect, in a case that the controller disables the driving of the engine, the controller controls components for driving the engine, and thereby the driving of the engine is disabled.

A further aspect may be preferably provided as the power tool further comprises an informing mechanism which informs the driving state of the engine.

According to this aspect, the driving of the engine which is under control due to a hybrid driving mechanism failure is informed to a user. That is, a state in which the engine does not work normally is informed to a user.

A further aspect may be preferably provided as the power tool further comprises a motor driving mode in which only the motor drives the driving shaft, and an engine driving mode in which only the engine drives the driving shaft. The hybrid driving mode, the motor driving mode and the engine driving mode are selectively switched, and the tool bit is driven in the selected driving mode.

According to the invention, a driving of a power tool is optimized, and thereby the power tool is rationally driven.
Other objects, features and advantages of the invention will be readily understood after reading the following detailed description together with the accompanying drawings and the claims.

### Brief Description of the Drawings:

Fig. 1 shows a side view of a power tool according to a preferred embodiment.
Fig. 2 shows a cross-sectional view taken from line II-II of Fig. 1.
Fig. 3 shows a block diagram of a drive system of the power tool.

### Detailed Description of the Invention:

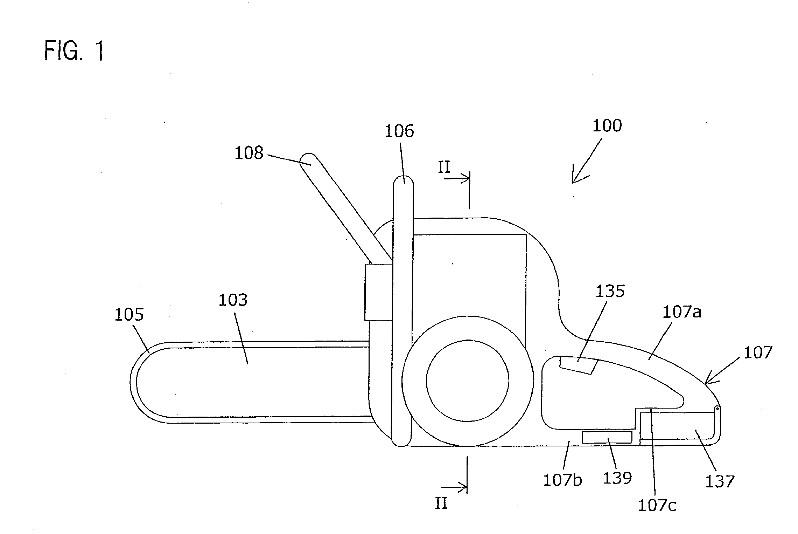

Each of the additional features and method steps disclosed above and below may be utilized separately or in conjunction with other features and method steps to provide and manufacture improved power tools and method for using such the power tools and devices utilized therein. Representative examples of the invention, which examples utilized many of these additional features and method steps in conjunction, will now be described in detail with reference to the drawings. This detailed description is merely intended to teach a person skilled in the art further details for practicing preferred aspects of the present teachings and is not intended to limit the scope of the invention. Only the claims define the scope of the claimed invention. Therefore, combinations of features and steps disclosed within the following detailed description may not be necessary to practice the invention in the broadest sense, and are instead taught merely to particularly describe some representative examples of the invention, which detailed description will now be given with reference to the accompanying drawings.
An exemplary embodiment is explained with reference to Fig. 1 to Fig. 3. This embodiment is one example of a power tool applied to a chain saw 100. As shown in Fig. 1, the chain saw 100 is mainly provided with a main housing 101, a guide bar 103, a front handle 106, a rear handle 107 and a hand guard 108 . Hereinafter, the guide bar 103 side of the chain saw 100 (left-hand side of Fig. 1) is called a front side, and the rear handle 107 side of the chain saw 100 (right-hand side of Fig. 1) is called a rear side.

The main housing 101 forms a main body as an outline of the chain saw 100. The guide bar 103 is arranged on the main housing 101 so as to protrude forward from the main housing 101. A saw chain 105 is detachably attached on an outer periphery of the guide bar 103 . The attached saw chain 105 is driven along the outer periphery of the guide bar 103, and thereby a cutting operation in which the saw chain 105 cuts a workpiece is performed.

The front handle 106 and the hand guard 108 are connected to the main housing 101 at a front side region of the chain saw 100. The rear handle 107 is connected to the main housing 101 at a rear side region of the chain saw 100. The chain saw 100 is adapted to perform a cutting operation in a state that a user holds the front handle 106 and the rear handle 107.

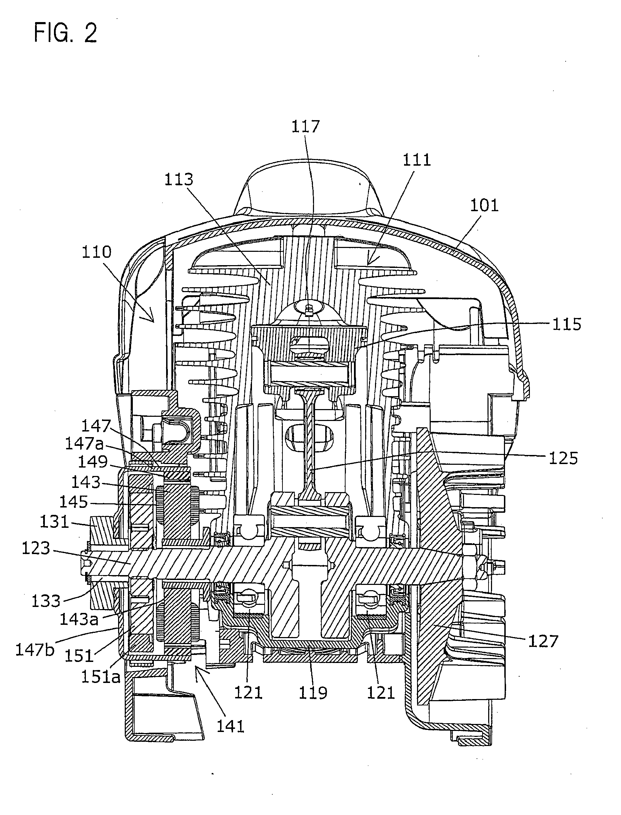

As shown in Fig. 2, a driving mechanism 110 is housed in the main housing 101. The driving mechanism 110 is mainly provided with a combustion engine 111 and an electric motor 141. In the driving mechanism 110, both output power of the combustion engine 111 and the electric motor 141 are transmitted to the saw chain 105 via a driving shaft 131. That is, the chain saw 100 is provided as a hybrid power tool driven by two different kinds of driving sources of the combustion engine 111 and the electric motor 141.

The combustion engine 111 is provided as a reciprocating engine, which is mainly provided with a cylinder 113, a piston 115, a spark plug 117, a crank case 119, a crank shaft 123 and a connecting rod 125. The piston 115 is slidably arranged within the cylinder 113. The spark plug 117 is arranged above the piston 115 within the cylinder 113. The crank case 119 is arranged under the cylinder 113 so as to connect to the cylinder 113. The crank shaft 123 is rotatably supported by a bearing 121 and arranged within the crank case 119. The connecting rod 125 is arranged so as to connect the piston 115 and the crank shaft 123. The combustion engine 111 is one example of a feature corresponding to "an engine" of the invention.

The crank shaft 123 is arranged so as to extend in a horizontal direction which crosses an extending direction (a lateral direction of Fig. 1) of the guide bar 103. One end side (left side of Fig. 2) of the crank shaft 123 is protruded outward from the main housing 101. The driving shaft 131 is attached at a protruding region of the crank shaft 123 via a needle bearing 133, the driving shaft 131 being relatively rotatable against the crank shaft 123.

A fly wheel 127 is attached on the other end side of the crank shaft 123 (right hand side of Fig. 2) so as to rotate integrally with the crank shaft 123. On the fly wheel 127, a recoil starter (not shown) is attached via a coupling. Accordingly, by operating the recoil starter, a user is able to start the combustion engine 111. The recoil starter 127 is also called a manual starter or a pull starter.

The electric motor 141 is provided as an outer rotor motor, and arranged coaxially with the crank shaft 123. The electric motor 141 is mainly provided with a stator core 143, a stator coil 145, an outer rotor 147 and a magnet 149. The stator core 143 is a disk-shaped member which is made of a magnetic material. The stator core 143 is fixed on an outer surface of the cylinder 113 and the crank case 119 via a sleeve 143a. That is, the crank shaft 123 is inserted into the sleeve 143a, and thereby the crank shaft 123 is rotatable against the fixed stator core 143. The stator coil 143 is wound on the stator core 143, and the stator core 143 is excited when electric current is provided to the stator coil 145.

The outer rotor 147 is a cup-shaped member which has a cylindrical side wall 147a and a bottom wall 147b. The side wall 147a is arranged so as to surround the stator core 143. The magnet 149 is arranged on an inner surface of the side wall 147a so as to face an outer surface of the stator core 143. The crank shaft 123 penetrates the bottom wall 147a and the bottom wall 147a is fixed to the driving shaft 131. That is, the outer rotor 147 of the electric motor 141 is directly connected to the driving shaft 131, and thereby output power of the electric motor 141 is transmitted to the driving shaft 131. Further, a position sensor (not shown) which detects a position of the outer rotor 147 is provided outside the outer rotor 147. The position sensor is adapted to detect the position of the outer rotor 147 at three points in a circumference direction of the outer rotor 147. The electric motor 141 is one example of a feature corresponding to "a motor" of the invention.

A centrifugal clutch 151 is arranged between the crank shaft 123 and the outer rotor 147 so as to rotate integrally with the crank shaft 123. In the centrifugal clutch 151, a clutch shoe 151a is moved outward in a radial direction of the centrifugal clutch 151 by a centrifugal force caused by rotation of the crank shaft 123, and thereby the clutch shoe 151a is contacted with the inner surface of the side wall 147a. Accordingly, the centrifugal clutch 151 transmits rotation of the crank shaft 123 to the outer rotor 147. That is, in a state that a rotation speed of the crank shaft 123 is not faster than a predetermined threshold, rotation of the crank shaft 123 is not transmitted to the outer rotor 147. On the other hand, in a state that the rotation speed of the crank shaft 123 is faster that the threshold, rotation of the crank shaft 123 is transmitted to the outer rotor 147.

As shown in Fig. 1, the rear handle 107 is provided with an upper side portion 107a, a lower side portion 107b and a battery attached portion 107c. The rear handle 107 is formed so as to protrude rearward from the main housing 103. A throttle lever 135 and a controller 139 are arranged at the rear handle 107. A battery pack 137 is detachably attached to the battery attached portion 107c of the rear handle 107. The battery pack 137 stores electricity for driving the electric motor 141. Accordingly, the electric motor 141 is electrically driven. The battery pack 137 is one example of a feature corresponding to "a battery" of the invention.

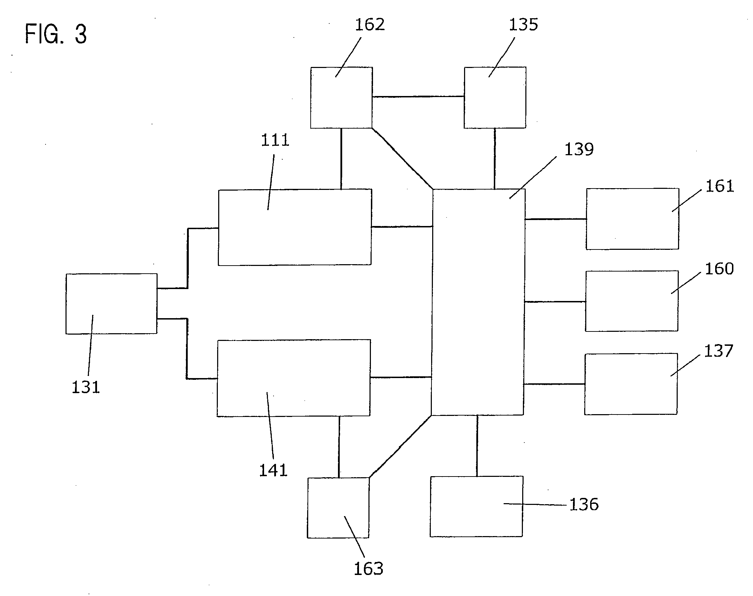

As shown in Fig. 3, the controller 139 is connected to the combustion engine 111, the electric motor 141, the throttle lever 135, a mode switching switch 136, the battery pack 137 attached to the battery attached portion 107c, a system check switch 160, a LED (light-emitting diode) 161 and sensors 162, 163. The sensor 162 is connected to the combustion engine 111, and the sensor 163 is connected to the electric motor 141. The controller 139 is one example of a feature corresponding to "a controller" of the invention.

The controller 139 is provided as a control device which controls the combustion engine 111 and the electric motor 141. That is, the controller 139 controls driving of the electric motor 141 by providing electric current from the battery pack 137 to the electric motor 141. Further, controller 139 controls (adjusts) a mixture ratio of fuel and air to the combustion engine 111 based on a manipulated variable of the throttle lever 135, and thereby the controller 139 adjusts output power (rotation speed) of the combustion engine 111. Further, the controller 139 switches a driving mode of the chain saw 100 between the first, the second and the third driving modes by an operation of the mode switching switch 136. Specifically, in the first driving mode, the saw chain 105 is driven by both the combustion engine 111 and the electric motor 141. In the second driving mode, the saw chain 105 is driven by only the combustion engine 111. Further, in the third driving mode, the saw chain 105 is driven by only the electric motor 141.

When the first driving mode is selected and the throttle lever 135 is operated, the combustion engine 111 and the electric motor 141 are driven. In a state that the rotation speed exceeds the predetermined threshold, the centrifugal clutch 151 is actuated, and thereby rotation of the crank shaft 123 is transmitted to the outer rotor 147 via the centrifugal clutch 151 . Therefore, both the combustion engine 111 and the electric motor 141 drive the driving shaft 131. That is, in the chain saw 100, the saw chain 105 is driven by both output power of the combustion engine 111 and the electric motor 141. The driving shaft 131 is one example of a feature corresponding to "a driving shaft" of the invention.

When the second driving mode is selected and the throttle lever 135 is operated, only the combustion engine 111 is driven. In a state that the rotation speed exceeds the predetermined threshold, the centrifugal clutch 151 is actuated, and thereby rotation of the crank shaft 123 is transmitted to the outer rotor 147 via the centrifugal clutch 151. Therefore, the combustion engine 111 drives the driving shaft 131 via the outer rotor 147. That is, in the chain saw 100, the saw chain 105 is driven by only the combustion engine 111. At this time, by rotating the outer rotor 147, the electric motor 141 is functioned as a generator, and electric current generated by the generator is provided to the battery pack 137. Accordingly, the battery pack 137 is charged.

When the third driving mode is selected and the throttle lever 135 is operated, only the electric motor 141 is driven. Therefore, the outer rotor 147 of the electric motor 141 drives the driving shaft 131. That is, in the chain saw 100, the saw chain 105 is driven only the electric motor 141.

The system check switch 160 is adapted to turn on/off a detecting device which detects a state of a hybrid driving mechanism. In this embodiment, the hybrid driving mechanism includes the combustion engine 111, the electric motor 141 and other elements for driving the combustion engine 111 and the electric motor 141. Further, the controller 139 also has a function of the detecting device which detects a state of a hybrid driving mechanism. That is, when the system check switch 160 is operated, the controller 139 starts to check a state of each elements of the hybrid driving mechanism.

Specifically, when the system check switch 160 is operated before starting the combustion engine 111, the sensor 162 detects an electrical conducting state of the throttle lever 135 and a remaining amount of fuel for the combustion engine 111. When the sensor 162 detects that the throttle lever 135 is in a conductive state even though the throttle lever 135 is not operated, the controller 139 disables the start-up of the combustion engine 111 due to a failure of the throttle lever 135. Further, when the sensor 162 detects that the fuel level is lower than a predetermined level, the controller 139 also disables the start-up of the combustion engine 111. That is, the sensor 162 detects a state of the combustion engine 111 and/or elements for driving the combustion engine 111, and the controller 139 disables the combustion engine 111 in accordance with the detecting result.

After the combustion engine 111 is started, the sensor 162 detects a fuel level for each predetermined time. In a case that the fuel level is lower than the predetermined level, the controller 139 controls the combustion engine 111 so as to be stopped. In this case, the controller 139 also controls the electric motor 141 so as to be stopped. The sensor 162 is one example of a feature corresponding to "a first sensor" of the invention.

Further, after the combustion engine 111 is started, the sensor 163 detects an electric current value provided to the electric motor 141. In a case that the electric current value provided to the electric motor 141 is higher than a predetermined threshold, the controller 139 judges that a high load is exerted on the electric motor 141. In other words, as a load exerted on the combustion engine 111 is lower than a designed value, the high load is exerted on the electric motor 141. Accordingly, the controller 139 judges that a driving failure of the combustion engine 111 is occurred, and then the controller 139 stops the combustion engine 111 and the electric motor 141. The sensor 163 is one example of a feature corresponding to "a second sensor" of the invention. Further, the sensor 162 and the sensor 163 are one example of a feature corresponding to "a driving mechanism state detector" of the invention.

In order to disable the combustion engine 111, a fuel supply to the combustion engine 111 may be stopped or a combustion of the combustion engine 111 may be stopped. That is, the controller 139 interrupts a fuel supply route to the combustion engine 111, and thereby the fuel supply is stopped. Further, the controller 139 controls the spark plug 117 not to be fired, and thereby the combustion engine 111 is disabled.

When the combustion engine 111 is disabled, the controller 139 turns on the LED 161, and informs to the outside that the combustion engine 111 is disabled. In a case that the combustion engine 111 is disabled before starting the combustion engine 111, the controller 139 flashes the LED 161 at high speed. On the other hand, in a case that the combustion engine 111 and the electric motor 141 are stopped after the combustion engine 111 is started, the controller 139 flashes the LED 161 at low speed. That is, respective states of the chain saw 100 in which the combustion engine 111 is disabled are informed by each flashing aspects of the LED 161. Further, color of light emitted by the LED 161 may be changed according to each states of the chain saw 100. The LED 161 is one example of a feature corresponding to "an informing mechanism" of the invention.

According to the embodiment described above, by the sensor 162 and the sensor 163, a failure of the hybrid driving mechanism which includes the combustion engine 111, the electric motor 141 and the elements for driving the combustion engine 111 and the electric motor 141 is detected. Accordingly, the combustion engine 111 is disabled before starting the combustion engine 111, or the combustion engine 111 is stopped after the combustion engine 111 is started. That is, the combustion engine 111 of the chain saw 100 is prevented from driving in an abnormal state.

Further, according to this embodiment, a load state of the electric motor 141 is detected by the sensor 163. Accordingly, a failure of the combustion engine 111 is detected. That is, a state of the engines is detected by not only the sensor 162 directly but also the sensor 163 indirectly via the electric motor 141. Accordingly, in case of a failure of one sensor, a state of the combustion engine 111 is detected by the other sensor. That is, a failure of the combustion engine 111 is reliably detected, and thereby the combustion engine 111 is disabled in safety.

Further, according to this embodiment, a state in which the combustion engine 111 is disabled is informed by the LED 161. Further, each states in which the combustion engine 111 is disabled are informed by each lighting aspects of the LED 161 respectively.

Further, according to this embodiment, since the controller 139 is arranged at the lower side portion 107b of the rear handle 107, the controller 139 is distantly positioned from the combustion engine 111 and the electric motor 141 which generate heat. Thus, the controller 139 is protected from heat of the combustion engine 111 and the electric motor 141. Further, the battery attached portion 107c is arranged at a distal end region of the rear handle 107 which is similarly distant from the combustion engine 111 and the electric motor 141. Therefore, the battery pack 137 attached to the battery attached portion 107c is also protected from heat of the combustion engine 111 and the electric motor 141. Especially, since the battery pack 137 is more distant than the controller 139 against the main housing 101 which houses the combustion engine 111 and the electric motor 141, the large capacity battery pack 137 which is needed to be protected from heat much more than the controller 139 is effectively protected.

Further, according to this embodiment, in a state that the electric motor 141 does not drive the driving shaft 131, the electric motor 141 is functioned as a generator. Accordingly, a generator other than the electric motor 141 is not necessary to provide to the chain saw 100. As a result, the chain saw 100 is lightened and downsized.

Further, according to this embodiment, the driving shaft 131 (the saw chain 105) is driven in one driving mode selected from the first to the third driving mode. Accordingly, by switching the driving mode based on the load exerted on the saw chain 105, output power of chain saw 100 is changed. As a result, energy efficiency is improved.

Further, according to this embodiment, since an outer rotor motor is provided as the electric motor 141, relatively large torque is obtained compared with the same size inner rotor motor. That is, distance (radius) of the electric motor 141 from a center of the rotation to a periphery of the outer rotor 147 is lengthened, and thereby the large torque of the electric motor 141 is obtained. Accordingly, the chain saw 100 is downsized.

In the embodiment described above, the sensor 162 is connected to the combustion engine 111 and the throttle lever 135, however it is not limited to such aspect. For example, the sensor 162 maybe connected to the mode switching switch 136 or the battery pack 137. Further, the sensor 162 may be adapted to detect an electrical conducting state of the mode switching switch 136 or voltage of the battery pack 137. In such aspect, when a failure of the mode switching switch 136 is detected, or when a low remaining capacity of the battery pack 137 is detected, the controller 139 disables the combustion engine 111.

Further, in this embodiment, the sensor 163 is connected to the electric motor 141, however it is not limited to such aspect. Since the electric motor 141 is provided as an outer rotor motor, a sensor for controlling rotation of the outer rotor 147 is provided. Thus, the sensor may be also utilized in order to detect electric current provided to the electric motor 141. That is, the sensor 163 may not be provided, and further a sensor for driving the electric motor 141 may be adapted to detect load exerted on the electric motor 141.

Further, in this embodiment, the LED 161 is provided as an informing mechanism, however it is not limited to such aspect. For example, a speaker which outputs sound or an actuator which generates vibration may be provided to the chain saw 100. According to this aspect, a disabled state of the combustion engine 111 is informed to the outside by sound or vibration.

Further, in this embodiment, when the engine failure is occurred after the combustion engine 111 is started, the controller 139 is adapted to stop the combustion engine 111, however it is not limited to such aspect. For example, the controller 139 may control the combustion engine 111 so that a rotation speed is reduced (restricted) not to activate the centrifugal clutch 151. That is, the controller 139 may control the driving of the combustion engine 111 based on a detection result of the sensor 162, 163. By reducing the rotation speed of the combustion engine 111, a state that the combustion engine 111 is controlled by the controller 139, in other words a state that the combustion engine 111 does not work in a normal way, is informed to the outside of the chain saw 100.

Further, in this embodiment, the electric motor 141 is provided as an outer rotor motor, however it is not limited to the outer rotor motor. For example, an inner rotor motor may be utilized to the chain saw 100. Further, an electromagnetic clutch may be utilized instead of the centrifugal clutch 151.

Further, in this embodiment, the saw chain 105 is driven in the first to the third driving modes respectively, however it is not limited to such aspect. For example, the chain saw 100 has at least the first driving mode, that is, the chain saw 100 may not have the second and the third driving modes.

Further, in this embodiment, the chain saw 100 is used to explain as one example of a power tool, however other power tool may be applied to the invention. As long as a power tool has an engine and a motor, for example, a brush cutter, a hammer drill or a circular saw may be applied.

A correspondence relation between each component of the embodiment and the invention is explained as follows. Further, the embodiment is one example to utilize the invention and the invention is not limited to the embodiment.

The chain saw 100 corresponds to "a power tool" of the invention.

The saw chain 105 corresponds to "a tool bit" of the invention.

The combustion engine 111 corresponds to "an engine" of the invention.

The combustion engine 111 corresponds to "a driving mechanism" of the invention.

The electric motor 141 corresponds to "a motor" of the invention.

The electric motor 141 corresponds to "a driving mechanism" of the invention.

The driving shaft 131 corresponds to "a driving shaft" of the invention.

The first driving mode corresponds to "a hybrid driving mode" of the invention.

The battery pack 137 corresponds to "a battery" of the invention.

The controller 139 corresponds to "a controller" of the invention.

The LED 161 corresponds to "an informing mechanism" of the invention.

The sensor 162 corresponds to "a driving mechanism state detector" of the invention.

The sensor 162 corresponds to "a first sensor" of the invention.

The sensor 163 corresponds to "a driving mechanism state detector" of the invention.

The sensor 163 corresponds to "a second sensor" of the invention.

Having regard to an aspect of the invention, following features are provided:

### (Feature 1)

The power tool according to any one of claims 1 to 8, further comprising a motor driving mode in which only the motor drives the driving shaft, and an engine driving mode in which only the engine drives the driving shaft,
wherein the hybrid driving mode, the motor driving mode and the engine driving mode are selectively switched, and the tool is driven in the selected driving mode.

### Description of Numerals:

- 100: chain saw
- 101: main housing
- 103: guide bar
- 105: saw chain
- 106: front handle
- 107: rear handle
- 107a: upper side portion
- 107b: lower side portion
- 107c: battery attached portion
- 108: hand guard
- 111: combustion engine
- 113: cylinder
- 115: piston
- 117: spark plug
- 119: crank case
- 121: bearing
- 123: crank shaft
- 125: connecting rod
- 127: fly wheel
- 131: driving shaft
- 133: needle bearing
- 135: throttle lever
- 136: mode switching switch
- 137: battery pack
- 138: capacitor
- 139: controller
- 141: electric motor
- 143: stator core
- 143a: sleeve
- 145: stator coil
- 147: outer rotor
- 147a: side wall
- 147b: bottom wall
- 149: magnet
- 151: centrifugal clutch
- 151a: clutch shoe
- 160: system check switch
- 161: LED
- 162: sensor
- 163: sensor

## Claims

1. A power tool which drives a tool bit, comprising:
an engine,
a motor,
a driving shaft which drives the tool bit,
a battery which provides electric current to the motor,
a controller which is connected to the battery,
a driving mechanism which is defined by at least the engine and the motor, and
a driving mechanism state detector which detects a driving state of the driving mechanism,
wherein the tool bit is driven in a hybrid driving mode in which both the engine and the motor drive the driving shaft,
and wherein the controller controls a driving of the engine based on a detection result of the driving mechanism state detector.

2. The power tool according to claim 1, wherein the controller disables the driving of the engine based on the detection result of the driving mechanism state detector.

3. The power tool according to claim 1 or 2, wherein the driving mechanism state detector includes a first sensor which detects a driving state of the engine.

4. The power tool according to claim 3, wherein the first sensor detects the driving state of the engine before the engine is started,
and wherein the controller controls the engine based on a detection result of the first sensor so that a starting of the engine is disabled.

5. The power tool according to claim 3 or 4, wherein the first sensor detects the driving state of the engine after the engine is started,
and wherein the controller controls the driving of the engine based on a detection result of the first sensor.

6. The power tool according to any one of claims 1 to 5, wherein the driving mechanism state detector includes a second sensor which detects a driving state of the motor,
and wherein the controller controls the driving of the engine based on a detection result of the second sensor.

7. The power tool according to any one of claims 1 to 6, wherein the controller stops firing of the engine and/or providing fuel to the engine to disable the driving of the engine.

8. The power tool according to any one of claims 1 to 7, further comprising an informing mechanism which informs the driving state of the engine.

9. The power tool according to any one of claims 1 to 8, further comprising a motor driving mode in which only the motor drives the driving shaft, and an engine driving mode in which only the engine drives the driving shaft,
wherein the hybrid driving mode, the motor driving mode and the engine driving mode are selectively switched, and the tool bit is driven in the selected driving mode.
